# EUROPÄISCHE PATENTSCHRIFT

(11) **EP 2 223 504 B1**
(45) Veröffentlichungstag und Bekanntmachung des Hinweises auf die Patenterteilung: **22.06.2016**
(21) Anmeldenummer: 08786142.3
(22) Anmeldetag: 14.07.2008
(51) Int. Cl.: H04L 29/08

(54) **ÜBERTRAGUNG VON FAHRZEUGINFORMATIONEN**
TRANSMISSION OF VEHICLE INFORMATION
TRANSMISSION D'INFORMATIONS D'UN VÉHICULE

(30) Priorität: 15.11.2007 DE 102007054896; 20.03.2008 DE 102008015232
(43) Veröffentlichungstag der Anmeldung: 01.09.2010
(73) Patentinhaber: Continental Teves AG & Co. OHG, 60488 Frankfurt (DE)
(72) Erfinder: STÄHLIN, Ulrich, 65670 Eschborn (DE); MENZEL, Marc, 35043 Marburg (DE)
(74) Vertreter: Bonn, Roman Klemens
(86) Internationale Anmeldenummer: PCT/EP2008/059190
(87) Internationale Veröffentlichungsnummer: WO 2009/062765

(56) Entgegenhaltungen:
- EP-A- 1 024 466
- EP-A- 1 136 967
- DE-A1- 19 513 640
- DE-A1- 19 755 875
- DE-A1-102005 013 799
- US-A1- 2007 208 496
- US-B1- 7 277 028

## Beschreibung

### Gebiet der Erfindung

Die Erfindung betrifft die Kommunikations- und Sicherheitstechnik für Fahrzeuge. Insbesondere betrifft die Erfindung eine Kommunikationseinrichtung für ein Fahrzeug zur Kommunikation mit einer Zentrale, ein Kommunikationssystem, ein Fahrzeug, die Verwendung einer Kommunikationseinrichtung in einem Fahrzeug, ein Verfahren zur Kommunikation zwischen einem Fahrzeug und einer Zentrale, ein Computerprogrammprodukt und ein computerlesbares Medium.

### Technologischer Hintergrund

Fahrzeug-zu-Fahrzeug Kommunikation und Fahrzeug-zu-Infrastruktur Kommunikation, im Folgenden auch Fahrzeug-zu-X (C2X) Kommunikation genannt, werden typischerweise mit einer WLAN-basierten Kommunikationstechnik in Verbindung gesetzt. Diese Kommunikationstechnik hat ein typisches Henne-Ei Problem: Es lohnt sich erst, die Kommunikation in ein Fahrzeug zu integrieren, wenn entsprechend viele andere Fahrzeuge damit ausgerüstet sind, da ansonsten die flächendeckende Nutzung nicht richtig funktioniert.

Es sind bereits Techniken für C2X auf Basis von zellulärem Funk bekannt. Diese Techniken können mit den in dieser Erfindung beschriebenen Techniken kombiniert werden. Floating-Car-Data ist ebenfalls bereits bekannt.

EP1024466 A1 offenbart das Erfassen und Verarbeiten verkehrsrelevanter Daten, die von einer Mehrzahl von Automobilen bereitgestellt werden. Durch Sensoren aufgenommene Verkehrsdaten werden bei Erreichen von vordefinierten Schwellwerten und/oder nach Ablauf einer Zeitperiode zur Nachbearbeitung an einen zentralen Server geschickt. Dieser vergleicht neu erhaltene mit bereits vorliegenden Daten, um geänderte Verkehrsdaten zu identifizieren und daraus resultierende Updates an identifizierte oder ausgewählte mobile Einheiten innerhalb des betroffenen räumlichen Gebietes zu schicken.

### Zusammenfassung der Erfindung

Es ist eine Aufgabe der Erfindung, eine verbesserte Übertragung von Fahrzeuginformation bereitzustellen.

Es sind eine Kommunikationseinrichtung, ein Kommunikationssystem, ein Fahrzeug, eine Verwendung, ein Verfahren, ein Computerprogrammprodukt und ein computerlesbares Medium gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen die Kommunikationseinrichtung, das Kommunikationssystem, das Fahrzeug, die Verwendung, das Verfahren, das Computerprogrammprodukt sowie das computerlesbare Medium.

Gemäß einem Ausführungsbeispiel der Erfindung ist eine Kommunikationseinrichtung für ein Fahrzeug zur Kommunikation mit einer Zentrale angegeben, wobei die Kommunikationseinrichtung eine Positionsbestimmungseinheit zur Bestimmung einer Position des Fahrzeugs, eine Steuereinheit zum Erzeugen von ersten Informationsdaten und eine Kommunikationseinheit zum Aufbau und Halten einer Kommunikationsverbindung zu der Zentrale und zum Senden der ersten Informationsdaten mittels der Kommunikationsverbindung an die Zentrale aufweist.

Die Kommunikationsverbindung basiert auf einem zellulären Kommunikationsnetz und die ersten Informationsdaten enthalten Daten über die Position des Fahrzeugs.

Durch den Einsatz von existierenden mobilen Kommunikationstechniken, wie sie in 2G, 3G, 3,5G und 4G Mobilfunknetzen Anwendung finden, können Informationen über Fahrzeuge aus den betreffenden Fahrzeugen an eine Zentrale übertragen werden, die ansonsten erst bei einer großflächigen Einführung von WLAN-basierter C2X-Kommunikation verfügbar wären. Andere beispielsweise verwendbare zelluläre Kommunikationstechniken sind WLAN über HotSpots, WiMax, etc.

Die erfindungsgemäße Übertragung der Fahrzeuginformation benötigt vorteilhaft sehr geringe Datenmengen und schützt durch eine zeitlich skalierbare Positionsübermittlung die Privatsphäre der Fahrzeugführer und Fahrzeuginsassen in vorteilhafter Weise.

Auf diese Weise kann eine fahrzeugrelevante Information einfach und sicher an im Umfeld befindliche Fahrzeuge übermittelt werden.

Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Fahrrad.

An dieser Stelle sei darauf hingewiesen, dass im Kontext der vorliegenden Erfindung GPS stellvertretend für sämtliche globale Navigationssatellitensysteme (GNSS) steht, wie z. B. GPS, Galileo, GLONASS (Russland), Compass (China), IRNSS (Indien), ...

Gemäß einem weiteren Ausführungsbeispiel der Erfindung handelt es sich bei der Kommunikationsverbindung um eine Internet Protocol basierte (IP)-Verbindung.

Gemäß einem weiteren Ausführungsbeispiel der Erfindung wird die Kommunikationsverbindung über die gesamte Fahrzeit des Fahrzeugs aufrechterhalten. Auf diese Weise wird ermöglicht, dass die Zentrale zu jedem Zeitpunkt relevante Daten an die einzelnen Fahrzeuge übermitteln kann.

Gemäß einem weiteren Ausführungsbeispiel der Erfindung weist die Kommunikationseinrichtung weiterhin eine Detektionseinheit zum Erfassen von Messwerten oder zur Detektion von Ereignissen auf, wobei die Steuereinheit zum Erzeugen von zweiten Informationsdaten auf Basis der erfassten Messwerte oder der detektierten Ereignisse ausgeführt ist, welche ebenfalls an die Zentrale übermittelt werden.

Die Kommunikationseinrichtung ist also nicht lediglich zur Übermittlung einer Fahrzeugposition an die Zentrale ausgeführt, sondern auch zur Übermittlung anderer relevanter Daten, die von der Fahrzeugsensorik detektiert werden. Ggf. können die Messdaten vor der Übermittlung analysiert, ausgewertet und/oder medienkonvertiert werden.

Der Begriff Medienkonvertierung bezeichnet ganz allgemein die Überführung, Umwandlung oder Konvertierung einer Datei von einem Dateiformat in ein anderes. Das gilt für den Transfer von Daten zwischen unterschiedlichen Medien und Dateisystemen ebenso, wie für die Übertragung von Daten von einem Speichermedium auf ein anderes. Beispielsweise können sämtliche Informationsdaten vor der Übermittlung in Sprach- oder Videoinformation umgewandelt werden.

Gemäß einem weiteren Ausführungsbeispiel der Erfindung korrespondieren die erfassten Messwerte oder die detektierten Ereignisse mit der Betätigung eines Warnblinkers des Fahrzeugs, einer glatten Fahrbahn (beispielsweise aufgrund von Vereisung oder Verschmutzung) oder einer Verkehrsinformation, wie einer Beschilderung.

Gemäß einem weiteren Ausführungsbeispiel der Erfindung werden die ersten Informationsdaten in ersten zeitlichen Abständen übermittelt. Weiterhin werden die zweiten Informationsdaten in zweiten zeitlichen Abständen übermittelt, wobei die zweiten zeitlichen Abstände kleiner sind als die ersten zeitlichen Abstände.

In anderen Worten werden die zweiten Informationen zu einer höheren Wiederholungsfrequenz übermittelt, als die ersten Informationen.

Die Wiederholungsfrequenz, mit der diese Informationen übermittelt werden, ist beispielsweise an die Dynamik der Fahrzeugbewegung bzw. der Dynamik der detektierten Ereignisse oder einer Änderungsrate der erfassten Messwerte angepasst.

Gemäß einem weiteren Ausführungsbeispiel der Erfindung weist die Kommunikationseinrichtung weiterhin eine Einheit zum Berechnen einer Route des Fahrzeugs auf, wobei die zweiten Informationsdaten Daten über die berechnete Route des Fahrzeugs enthalten.

Bei einer solche Einheit handelt es sich beispielsweise um eine Navigationseinheit des Fahrzeugs.

Gemäß einem weiteren Ausführungsbeispiel der Erfindung basiert die Kommunikationsverbindung auf UMTS, GPRS, LTE, WLAN (über HotSpots) oder WiMax.

Gemäß einem weiteren Ausführungsbeispiel der Erfindung ist die Kommunikationseinrichtung zur Bereitstellung einer Datensicherheit zum dynamischen Wechsel einer Identifikationsbezeichnung (ID) der Kommunikationseinrichtung ausgeführt.

Dieser ID-Wechsel kann beispielsweise die sog. MAC ID (also die physikalische Hardwareadresse der Kommunikationseinheit), die IP ID oder die Fahrzeug-zu-Fahrzeug ID betreffen.

Der dynamische Wechsel der Identifikationsbezeichnung erfolgt beispielsweise in zufälligen Zeitabständen innerhalb des Fahrzeugs, ist also nicht extern getriggert.

Auf diese Weise kann die Datensicherheit erhöht werden.

Gemäß einem weiteren Ausführungsbeispiel der Erfindung ist die Kommunikationseinrichtung als sog. eCall-Einheit ausgeführt (eCall-Modul).

Gemäß einem weiteren Ausführungsbeispiel der Erfindung ist ein Kommunikationssystem zur Kommunikation zwischen einem Fahrzeug und einer Zentrale angegeben, welches eine oben beschriebene Kommunikationseinrichtung und eine Zentrale zum Empfang der Informationsdaten und zur Übermittlung von mit den Informationsdaten korrespondierenden Daten an ausgewählte weitere Fahrzeuge aufweist.

Die Zentrale umfasst beispielsweise einen Server, der alle relevanten Daten an diejenigen Fahrzeuge schickt, für die diese Informationen bestimmt sind. Die Zuordnung der Fahrzeuge erfolgt hierbei auf Basis der übermittelten Fahrzeugpositionen und der entsprechenden Fahrzeug-Identifikationsbezeichnung (Fahrzeug-ID).

Gemäß einem weiteren Ausführungsbeispiel der Erfindung ist die Übertragungsrate, mit der die korrespondierenden Daten übermittelt werden, an eine Dynamik der erfassten Messwerte oder des detektierten Ereignisses angepasst. Diese Anpassung kann von der Zentrale vorgenommen oder von dem sendenden Fahrzeug vorgegeben bzw. getriggert werden.

Gemäß einem weiteren Ausführungsbeispiel der Erfindung ist das Kommunikationssystem zur Ermittlung eines wahrscheinlichen Aufenthaltsbereichs des Fahrzeugs ausgeführt.

Beispielsweise übermittelt der Fahrer vor Fahrtbeginn eine geplante Route an die Zentrale, zusammen mit einer Startposition und einem Startzeitpunkt. Ab diesem Zeitpunkt kann die Zentrale berechnen, zu welchem Zeitpunkt sich das Fahrzeug ungefähr an welcher Stelle auf der Route befindet. Nur wenn das Fahrzeug die berechnete Route verlässt, werden neue Positionsdaten an die Zentrale gesendet. Die Routenplanung kann fahrzeugintern oder beispielsweise auch Online von zu Hause aus vorgenommen werden.

Auf diese Weise kann der Datenverkehr reduziert werden.

Gemäß einem weiteren Ausführungsbeispiel der Erfindung ist die Verwendung einer oben beschriebenen Kommunikationseinrichtung in einem Fahrzeug angegeben.

Gemäß einem weiteren Ausführungsbeispiel der Erfindung ist ein Verfahren zur Kommunikation zwischen einem Fahrzeug und einer Zentrale angegeben, bei dem eine Position des Fahrzeugs bestimmt wird und erste Informationsdaten erzeugt werden. Die ersten Informationsdaten enthalten Daten über die Position des Fahrzeugs. Weiterhin erfolgt ein Aufbau und ein Halten einer Kommunikationsverbindung zu der Zentrale, gefolgt von einem Senden der ersten Informationsdaten mittels der Kommunikationsverbindung an die Zentrale. Die Zentrale empfängt die Informationsdaten und übermittelt Daten, die mit den Informationsdaten korrespondieren, an weitere Fahrzeuge, die sich im Umfeld des Fahrzeugs befinden. Die Kommunikationsverbindung basiert auf einem zellulären Kommunikationsnetz, beispielsweise einem Mobilfunknetz.

An dieser Stelle sei darauf hingewiesen, dass die Positionsbestimmung des Fahrzeugs auch über eine Zellpositionierung erfolgen kann. Dies bietet sich insbesondere bei der Verwendung von GSM-, UMTS- oder LTE-Netzen an, ist jedoch auch bei WiMax oder WLAN (über HotSpots) möglich.

Gemäß einem weiteren Ausführungsbeispiel der Erfindung ist ein Computerprogrammprodukt angegeben, das, wenn es auf einem Prozessor ausgeführt wird, den Prozessor anleitet, die folgenden Schritte durchzuführen: Bestimmung einer Position des Fahrzeugs, Erzeugen von ersten Informationsdaten, Aufbau und Halten einer Kommunikationsverbindung zu der Zentrale, Senden der ersten Informationsdaten mittels der Kommunikationsverbindung an die Zentrale, wobei die ersten Informationsdaten Daten über die Position des Fahrzeugs enthalten und wobei die Kommunikationsverbindung auf einem zellulären Kommunikationsnetz basiert.

Gemäß einem weiteren Ausführungsbeispiel der Erfindung ist ein computerlesbares Medium angegeben, auf dem ein Computerprogrammprodukt gespeichert ist, das, wenn es auf einem Prozessor ausgeführt wird, den Prozessor anleitet, die oben angegebenen Schritte durchzuführen.

Gemäß einem weiteren Ausführungsbeispiel der Erfindung ist ein Fahrzeug mit einer oben beschriebenen Kommunikationseinrichtung angegeben.

Im Folgenden werden mit Verweis auf die Figuren bevorzugte Ausführungsbeispiele der Erfindung beschrieben.
Fig. 1 zeigt eine schematische Darstellung einer Kommunikationseinrichtung gemäß einem Ausführungsbeispiel der Erfindung.
Fig. 2 zeigt eine schematische Darstellung eines Kommunikationssystems gemäß einem Ausführungsbeispiel der Erfindung.
Fig. 3 zeigt ein Flussdiagramm eines Verfahrens gemäß einem Ausführungsbeispiel der Erfindung.

Die Darstellungen in den Figuren sind schematisch und nicht maßstäblich.

In der folgenden Figurenbeschreibung werden für die gleichen oder ähnlichen Elemente die gleichen Bezugsziffern verwendet.

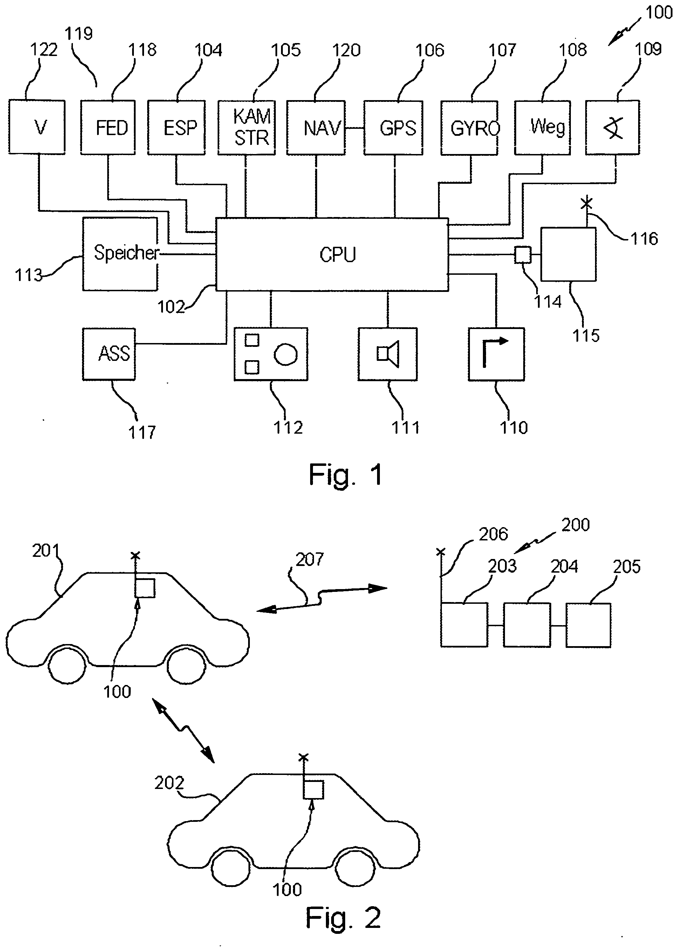

Fig. 1 zeigt eine schematische Darstellung von Komponenten einer Kommunikationseinrichtung für ein Fahrzeug zur Kommunikation mit einer Zentrale. Die Kommunikationseinrichtung 100 ist beispielsweise in dem Fahrzeug installiert und weist eine Kommunikationseinheit 115 mit einer Antenne 116, eine Detektionseinheit 119 mit einer Positionsbestimmungseinheit 106 sowie eine Steuereinheit 102 auf.

Zu sendende Daten, welche von der Steuereinheit 102, die beispielsweise in Form einer CPU ausgeführt ist, an die Kommunikationseinheit 115 übertragen werden, können über eine Verschlüsselungseinrichtung 114 verschlüsselt werden. Ebenso können die empfangenen Daten, die von der Kommunikationseinheit 115 an die Steuereinheit 102 übertragen werden, von der Verschlüsselungseinheit 114 entschlüsselt werden.

Weiterhin kann ein dynamischer ID-Wechsel vorgenommen werden.

Auf diese Weise kann die Gefahr eines Missbrauchs verringert werden.

Mit der Steuereinheit 102 ist eine Eingabeeinheit 112 verbunden. Durch die Eingabeeinheit 112 können verschiedene Einstellungen der Kommunikationseinrichtung und ggf. auch einer damit zusammenhängenden Navigationseinheit 120 vorgenommen werden. Weiterhin ist eine optische Ausgabeeinheit in Form eines Monitors 110 vorgesehen, auf der beispielsweise Zielführungsinformationen oder Warninformationen ausgegeben werden können. Diese Informationen können auch über die akustische Ausgabeeinheit 111 ausgegeben werden. Die Ausgabe über die akustische Ausgabeeinheit 111 hat den Vorteil, dass der Fahrer weniger vom aktuellen Verkehrsgeschehen abgelenkt wird.

In einem Speicherelement 113, das mit der Steuereinheit 102 verbunden ist oder in der Steuereinheit 102 integriert ist, sind digitale Kartendaten (z. B. als Navigationskartendaten) in Form von Datensätzen abgelegt. Beispielsweise sind in dem Speicherelement 112 auch zusätzliche Informationen über Verkehrsbeschränkungen, Infrastruktureinrichtungen und dergleichen abgelegt und den Datensätzen zugeordnet.

Unter dem Begriff "digitale Karten" sind auch Karten für fortschrittliche Fahrerassistenzsysteme (ADAS, Advanced Driver Assistance System) zu verstehen, ohne dass eine Navigation stattfindet.

Weiterhin ist ein Fahrerassistenzsystem 117 vorgesehen, welches mit den digitalen Kartendaten oder Warnungen oder anderen Informationen aus der Kommunikation versorgt wird.

Zur Bestimmung der aktuellen Fahrzeugposition weist die Kommunikationseinrichtung eine Navigationseinheit 120 auf, die an den Satellitennavigationsempfänger 106 angeschlossen ist. Der Satellitennavigationsempfänger 106 dient zum Empfang von Navigationssignalen von beispielsweise Galileo-Satelliten oder GPS-Satelliten. Natürlich kann die Navigationseinheit mit dem Satellitennavigationsempfänger 106 auch für andere Satellitennavigationssysteme ausgeführt sein.

Da die Navigationssignale beispielsweise im innerstädtischen Bereich nicht immer empfangbar sind, weist die Kommunikationseinrichtung zur Durchführung einer Koppelnavigation zudem einen Richtungssensor 107, einen Wegstreckensensor 108, einen Lenkradwinkelsensor 109, einen Federwegsensor 118, eine ESP-Sensorik 104 und ggf. einen optischen Detektor 105, beispielsweise in Form einer Kamera oder eines Strahlsensors (Radar- oder Lidarsensor), auf. Weiterhin weist die Detektionseinheit 119 einen Geschwindigkeitsmesser 122 auf.

Die Signale des GPS-Empfängers und der übrigen Sensoren werden in der Steuereinheit 102 oder auch in der Navigationseinheit 120 bearbeitet. Die aus diesen Signalen ermittelte Fahrzeugposition wird über Map Matching mit den Straßenkarten abgeglichen. Die so gewonnene Zielführungsinformation wird über den Monitor 110 schließlich ausgegeben.

Neben der Verwendung eines Satellitennavigationssystems kann die Fahrzeugposition auch über andere Fahrzeugsensorik oder über Zellpositionierung in Verbindung mit einem Funknetz erfolgen.

Fig. 2 zeigt eine schematische Darstellung eines Kommunikationssystems gemäß einem Ausführungsbeispiel der Erfindung. Es sind zwei Fahrzeuge 201, 202 vorgesehen, welche jeweils eine Kommunikationseinrichtung 100 aufweisen. Weiterhin ist eine Zentrale 200 mit einer Kommunikationseinheit 203, einer Antenne 206, einem Server 204 und einem Datenspeicher 205 vorgesehen. Die Zentrale sowie die Kommunikationseinrichtungen 100 der Fahrzeuge 201, 202 können miteinander über die Funkübertragungsstrecke 207 kommunizieren.

Die Kommunikation erfolgt über zelluläre Kommunikationstechniken, wie z. B. GPRS, UMTS, LTE, WiMax, WLAN (über HotSpots), ... Diese Kommunikationstechniken werden bereits für Mobilfunk verwendet, so dass die notwendige Infrastruktur hierfür vorhanden ist. Problematisch bei zellulärem Funk ist die Latenzzeit. Daher können unter Umständen nicht alle C2X Verfahren hinsichtlich der Fahrzeugsicherheit dargestellt werden, jedoch kann bereits eine große Zahl abgebildet werden. Ein Ausführungsbeispiel der Erfindung umfasst die folgenden Verfahrensschritte:
- Die teilnehmenden Fahrzeuge bauen eine IP-Verbindung zu dem Server bzw. der Zentrale 200 auf. Diese IP-Verbindung wird während der kompletten Fahrt aufrechterhalten.
- Die Fahrzeuge senden in relativ großen Abständen (z. B. alle fünf Minuten) ihre aktuelle Position, die beispielsweise über GPS oder Galileo, andere Fahrzeugsensorik oder eine Zellpositionierung ermittelt wurde, an den Server. Dieser kann dadurch einen Bereich feststellen, in dem sich das Fahrzeug wahrscheinlich befindet.

- Wurde eine Route geplant (z. B. über das Navigationsgerät 120), so wird diese Route ebenfalls an den Server gesendet. Bei Abweichungen von dieser Route oder Neuplanung wegen Stau wird die neu geplante Route erneut an den Server gesendet.
- Tritt bei einem Fahrzeug ein Ereignis ein, dass an andere Fahrzeuge übermittelt werden soll, so wird dieses Ereignis inklusive der Position des Ereignisses und evtl. weiterer notwendiger Informationen in kurzen Abständen (z. B. alle fünf Sekunden) an den Server gesendet. Der Server verteilt dann die Information über das Ereignis an alle Fahrzeuge, die sich in der Nähe des Fahrzeugs befinden. Hierbei wird die Übertragungsrate vom Server an das Fahrzeug an die Dynamik des Ereignisses angepasst. Steht beispielsweise das Ereignis (falls es sich z. B. um ein liegengebliebenes Fahrzeug handelt), wird selten übertragen. Bewegt sich das Ereignis sehr ungleichmäßig, wird häufiger übertragen. Mögliche Ereignisse sind:
- Warnblinker (ggf. mit weiterer Klassifizierung des auslösenden Ereignisses);
- Einsatzfahrzeug im Einsatz;
- Straßenglätte bzw. Reibwert, z. B. ermittelt über ABS/ESP/ASR/ bzw. Fahrzeugsicherheitssysteme;
- die Geschwindigkeit des Fahrzeugs liegt deutlich unter der Geschwindigkeitsbeschränkung für den aktuellen Straßenabschnitt, wie beispielsweise bei einer Staugefahr;
- Umleitungsmanagement (auf Fernstraßen und innerstädtisch);
- Reisezeitinformationssystem;
- Verkehrszeichenassistent;
- Baustellen-Informationssystem;
- Baustellendurchleitungsassistent;
- bevorrechtigte Ampelschaltung für Einsatzfahrzeuge;
- lokale Informationsdienste; und
- weitere C2X-Anwendungsfälle mit geringer Anforderung an die Latenzzeit der Datenübertragung.
- Zusätzlich werden noch Verkehrsinformationen, Informationen über Baustellen, Informationen über Parkraum, Informationen über Benzinpreise in der Nähe, etc. an das Fahrzeug übertragen, falls erwünscht.

Über die gleiche Hardware ist auch die Bereitstellung eines Ampelphasenassistents möglich. Vorteilhafterweise werden alle diese Optionen über eine eCall-Hardware realisiert, da hierzu bereits eine zelluläre Kommunikation sowie eine Positionierung (z. B. per GPS) notwendig sind.

Der Vorteil des beschriebenen Verfahrens liegt in der Verwendung von bereits existierenden Kommunikationstechniken für Anwendungsfälle der C2X-Kommunikation, die ansonsten auf 802.11p angewiesen sind, welches noch nicht endgültig standardisiert ist. Da Informationen nur sehr sporadisch gesendet werden (außer im Falle eines Ereignisses), ist auch der Datenschutz gewährleistet. Zum weiteren Datenschutz werden noch Techniken, wie dynamischer ID-Wechsel, eingesetzt. Da nur sehr selten Informationen versendet werden, sind auch die Kommunikationskosten als sehr gering anzusehen.

Für bessere Verkehrsinformationen kann das Verfahren mit Floating-Car-Data kombiniert werden, wodurch jedoch der Datenschutz gefährdet sein kann. Ist die Anzahl der Teilnehmer am Floating-Car-Data jedoch groß genug und werden Techniken wie dynamischer ID-Wechsel eingesetzt, so kann auch hier davon ausgegangen werden, dass das Verfahren den Datenschutzauflagen gerecht wird.

Im Folgenden werden zwei exemplarische Ausführungsbeispiele beschrieben, welche natürlich auch miteinander kombiniert werden können.

### Ausführungsbeispiel 1:

Die teilnehmenden Fahrzeuge werden von einem herannahenden Einsatzfahrzeug (wie Ambulanz, Feuerwehr, Polizei, ...) gewarnt. Es wird angezeigt, von wo sich der Einsatzwagen dem Fahrzeug nähert.

Sobald ein Einsatzfahrzeug zu einem Einsatz aufbricht (und das Blaulicht und/oder die Sirene betätigt hat), meldet es seine Position inklusive Zeitstempel per GPRS an den Serviceprovider. Beispielsweise wird hierfür eine IP-Verbindung eingesetzt. Zur Positionierung und für den Zeitstempel wird vorteilhafterweise GPS verwendet. Falls die Route des Einsatzfahrzeugs auch schon bekannt ist, wird diese ebenfalls an einen Serviceprovider gemeldet. Eine Aktualisierung (Update) der Position erfolgt in konstanten Abständen, z. B. in Abständen von fünf Sekunden.

Die Fahrzeuge melden ebenfalls ihre Position inklusive Zeitstempel an einen Serviceprovider, beispielsweise ebenfalls über eine IP-Verbindung. Ist schon bekannt, welche Route gefahren wird (z. B. durch die Planung in einem Navigationsgerät), wird diese ebenfalls an den Serviceprovider übermittelt. Die Übermittlung der eigenen Position geschieht im Normalfall nur, wenn sich die befahrene Straße ändert bzw. wenn von der geplanten Route abgewichen wird. Ansonsten erfolgt nur in sehr großen Zeitabständen eine erneute Meldung der Position, beispielsweise im Abstand von fünf Minuten.

Befindet sich nun ein Einsatzfahrzeug in der Nähe der eigenen Position, so schickt der Serviceprovider diese Information an das eigene Fahrzeug, zusammen mit dem Straßensegment, in dem sich der Einsatzwagen befindet und zusammen mit der geplanten Route des Einsatzfahrzeugs. Wird der Abstand zwischen dem Straßensegment des Einsatzfahrzeugs und dem Straßensegment des eigenen Fahrzeugs gering (unterschreitet also einen vorbestimmten Schwellwert) bzw. befinden sich beide im gleichen Straßensegment, so sendet das eigene Fahrzeug eine kurze Meldung an den Serviceprovider. Ab diesem Zeitpunkt (im Folgenden Meldezeitpunkt bzw. Meldeschwelle genannt) bekommt das eigene Fahrzeug in kurzen Abständen die aktuelle Position des Einsatzfahrzeugs übermittelt. Ist das Einsatzfahrzeug am eigenen Fahrzeug vorbeigefahren, so sendet nun das eigene Fahrzeug erneut eine Meldung an den Serviceprovider und beendet damit die Übertragung der Position des Einsatzfahrzeugs in kurzen Abständen. Es wird nur noch das Straßensegment, etc. geschickt, wie ganz zu Anfang beschrieben.

Bei einer angenommenen Latenz von zwei bis drei Sekunden für die Übertragung der Daten mittels GPRS ist jeweils notwendig zu wissen, in welchem Straßensegment sich Fahrzeug und Einsatzfahrzeug befinden. Befinden sich beide innerhalb der Meldeschwelle, so ist zusätzlich die Position des Einsatzfahrzeugs in diesem Straßensegment interessant.

### Ausführungsbeispiel 2:

Fahrzeuge werden darüber informiert, dass ein anderes Fahrzeug seinen Warnblinker angeschaltet hat. Es wird angezeigt, wie weit diese Gefahr entfernt ist und evtl. was der Grund für die Warnung ist. Mögliche Gründe können ein platter Reifen eines Fahrzeugs oder auslaufendes Benzin sein.

### 1. Das warnende Fahrzeug:

Sobald die Warnfunktion aktiviert wird, wird via GPRS/UMTS/... eine Meldung an einen Server gesendet. Die Meldung wird so lange alle 20 Sekunden wiederholt, solange die Warnfunktion aktiviert bleibt. Die Meldung umfasst Zeitstempel, GPS-Position mit Genauigkeit, falls vorhanden gematchte Kartendaten (beispielsweise Straßenname, geografische Position, ...) und evtl. Routendaten aus dem Navigationsgerät. Zusätzlich können noch Informationen gesendet werden, die eine genauere Bestimmung ermöglichen, warum die Warnblinker aktiviert wurden (z. B. "geplatzter Reifen").

### 2. Das gewarnte Fahrzeug:

Das Fahrzeug "abonniert" den Warnservice, indem es alle fünf Minuten seine Position via GPRS/UMTS/... an den Server sendet. Es aktualisiert seine Position schneller, wenn es sich von seiner letzten Positionsmeldung mehr als 500 m in der Stadt bzw. 10km auf der Autobahn entfernt hat bzw. wenn es seine geplante Route verlässt. Diese Route wird sofort an den Server gesendet.

### 3. Der Server

Sobald eine Warnmeldung gemeldet wird, vergleicht der Server deren Position mit den Positionen der Abonnenten und leitet diese Nachricht via GPRS/UMTS/... allen Abonnenten (die sich in einem Umkreis von beispielsweise einem Kilometer befinden) sofort weiter. Sobald dies abgearbeitet ist, werden alle Abonnenten im Umkreis von fünf Kilometern gewarnt. Die Warnung wird dabei alle 20 Sekunden wiederholt, bis vom warnenden Fahrzeug die Warnmeldung beendet wird.

### 4. Das gewarnte Fahrzeug:

Das Fahrzeug hat die Daten empfangen und vergleicht die Daten mit den eigenen Routen-/Karten-/GPS-Daten und generiert ggf. eine Warnung an den Fahrer oder lässt das Navigationsgerät eine Ausweichroute berechnen.

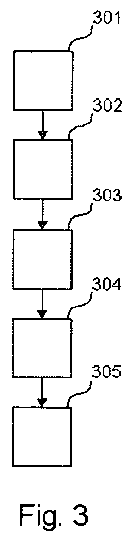

Fig. 3 zeigt ein Flussdiagramm eines Verfahrens gemäß einem Ausführungsbeispiel der Erfindung. In Schritt 301 wird eine IP-Verbindung zu einem Server (bzw. einer Zentrale) aufgebaut und über die gesamte Fahrzeit gehalten. In Schritt 302 wird die eigene Fahrzeugposition bestimmt und an den Server in relativ großen Zeitabständen gesendet. Weiterhin wird in Schritt 303 eine geplante Route an den Server gesendet. In Schritt 304 werden bestimmte Ereignisse inklusive der entsprechenden Position und ggf. Zusatzinformationen in kleinen Abständen an den Server gesendet. Dann, in Schritt 305, sendet der Server (ggf. nach einer entsprechenden Verarbeitung/Analyse der empfangenen Informationen) die relevanten Ereignisse an bestimmte, ausgewählte Fahrzeuge in der Umgebung der Ereignisse.

Die Fahrzeuge können über die Kommunikationsverbindung ihre aktuelle Position zyklisch an den Server übermitteln, woraufhin der Server einen geografischen Bereich bestimmt, in dem sich das Fahrzeug wahrscheinlich befindet. Nach Eintritt eines Fahrzeug-relevanten Ereignisses werden dieses Ereignis repräsentierende Informationen sowie die Position des Fahrzeug-relevanten Ereignisses und Metainformationen über das Fahrzeugrelevante Ereignis in zeitlich verkürzten Intervallen an den Server übermittelt, der dann diese Informationen an andere Fahrzeuge weitergibt. Die Übertragungsrate vom Server an die Fahrzeuge ist an die Dynamik der Ereignisse angepasst.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Verfahren zur Kommunikation zwischen einem Fahrzeug und einer Zentrale (200) mit einem Server (204), das Verfahren aufweisend die Schritte:
Bestimmung einer Position des Fahrzeugs;
Erzeugen von ersten Informationsdaten;
Aufbau und Halten einer Kommunikationsverbindung zu der Zentrale;
Senden der ersten Informationsdaten mittels der Kommunikationsverbindung an die Zentrale;
Empfang der Informationsdaten in der Zentrale;
Übermittlung von mit den Informationsdaten korrespondierenden Daten von der Zentrale an weitere Fahrzeuge, die sich im Umfeld des Fahrzeugs befinden;
wobei die ersten Informationsdaten Daten über die Position des Fahrzeugs enthalten; und
wobei die Kommunikationsverbindung auf einem zellulären Kommunikationsnetz basiert
**dadurch gekennzeichnet,**
**dass** das Fahrzeug eine Kommunikationsverbindung in Form einer IP-Verbindung zur der Zentrale (200) aufbaut, wobei die IP-Verbindung während der kompletten Fahrt aufrechterhalten wird, und das das Fahrzeug in großen Zeitabständen seine aktuelle Position an den Server sendet, wobei die Zentrale einen Bereich feststellt, in dem sich das Fahrzeug befindet, und
bei Eintritt eines Ereignisses im Fahrzeug, das an die weiteren Fahrzeuge übermittelt werden soll, dieses Ereignis inklusive der Position des Ereignisses und weiterer notwendiger Informationen in kurzen Abständen an den Server gesendet wird, wobei der Server die Information über das Ereignis an alle Fahrzeuge, die sich in der Nähe des Fahrzeugs befinden, sendet, wobei die Übertragungsrate von der Zentrale an die Fahrzeuge an die Dynamik des Ereignisses angepasst ist.

2. Verfahren nach Anspruch 1,
**dadurch gekennzeichnet,**
**dass** die aktuelle Position über die Fahrzeugsensorik ermittelt wird.

3. Verfahren nach einem der vorgehenden Ansprüche, **dadurch gekennzeichnet,**
**dass** bei Vorliegen einer Routenplanung diese Route an den Server gesendet wird und bei
Abweichungen von dieser Route oder Neuplanung eine neu geplante Route erneut an den Server gesendet wird.

## Claims

1. Method for communication between a vehicle and a control centre (200) having a server (204), said method having the following steps:
a position of the vehicle is determined;
first information data are produced;
a communication link to the control centre is set up and held;
the first information data are sent to the control centre using the communication link;
the information data are received in the control centre; data corresponding to the information data are transmitted from the control centre to further vehicles which are in the surroundings of the vehicle;
wherein the first information data contain data about the position of the vehicle; and
wherein the communication link is based on a cellular communication network,
**characterized**
**in that** the vehicle sets up a communication link in the form of an IP link to the control centre (200), wherein the IP link is maintained throughout the journey,
and **in that** the vehicle sends its current position to the server at long intervals of time, with the control centre determining a region in which the vehicle is situated, and the occurrence of an event in the vehicle that needs to be transmitted to the further vehicles prompts this event, including the position of the event and further necessary information, to be sent to the server at short intervals, wherein the server sends the information about the event to all vehicles that are situated in proximity to the vehicle, the transmission rate from the control centre to the vehicles matching the dynamics of the event.

2. Method according to Claim 1,
**characterized**
**in that** the current position is ascertained by means of the vehicle sensor system.

3. Method according to either of the preceding claims,
**characterized**
**in that** if route planning is in place then this route is sent to the server, and deviations from this route or replanning prompt(s) a replanned route to be sent to the server again.

## Revendications

1. Procédé de communication entre un véhicule et une centrale (200) équipée d'un serveur (204), le procédé comprenant les étapes suivantes :
détermination d'une position du véhicule ;
génération de premières données d'information ;
établissement et maintien d'une liaison de communication vers la centrale ;
envoi des premières données d'information à la centrale au moyen de la liaison de communication ;
réception des données d'information dans la centrale ;
communication de données correspondant aux données d'information de la centrale à d'autres véhicules qui se trouvent aux alentours du véhicule ;
les premières données d'information contenant des données relatives à la position du véhicule ; et
la liaison de communication se basant sur un réseau de communication cellulaire
**caractérisé en ce**
**que** le véhicule établit une liaison de communication sous la forme d'une liaison IP vers la centrale (200), la liaison IP étant maintenue pendant la totalité du déplacement,
et en ce que le véhicule envoie sa position actuelle au serveur à des intervalles de temps longs, la centrale définissant une zone dans laquelle se trouve le véhicule, et
lorsqu'il se produit dans le véhicule un événement qui doit être communiqué aux autres véhicules, cet événement ainsi que la position de l'événement et des informations nécessaires supplémentaires sont envoyés à des intervalles de temps courts au serveur, le serveur envoyant les informations relatives à l'événement à tous les véhicules qui se trouvent à proximité du véhicule, le débit de transmission de la centrale vers les véhicules étant adapté à la dynamique de l'événement.

2. Procédé selon la revendication 1, **caractérisé en ce que** la position actuelle est déterminée par le biais du système de détection du véhicule.

3. Procédé selon l'une des revendications précédentes, **caractérisé en ce qu'**en présence d'un itinéraire planifié, cet itinéraire est envoyé au serveur et un nouvel itinéraire planifié est renvoyé au serveur en cas d'écarts par rapport à cet itinéraire ou de nouvelle planification.
